(19) Europäisches Patentamt / European Patent Office / Office européen des brevets

(11) EP 4 502 960 A1

(12) **EUROPEAN PATENT APPLICATION**
published in accordance with Art. 153(4) EPC

(43) Date of publication:
05.02.2025  Bulletin 2025/06

(21) Application number: 23825957.6

(22) Date of filing: 27.04.2023

(51) International Patent Classification (IPC):
*G06V 10/12* (2022.01)

(52) Cooperative Patent Classification (CPC):
G01P 5/02; G05B 19/4155; G06V 10/12;
G06V 10/72; G05B 2219/37399

(86) International application number:
PCT/CN2023/091351

(87) International publication number:
WO 2023/246304 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.06.2022  CN 202210715833

(71) Applicant: Tencent Technology (Shenzhen)
Company Limited
Shenzhen, Guangdong 518057 (CN)

(72) Inventors:
• YOU, Jin
  Shenzhen, Guangdong 518057 (CN)
• TANG, Huizhong
  Shenzhen, Guangdong 518057 (CN)
• WANG, Shaoming
  Shenzhen, Guangdong 518057 (CN)
• GUO, Runzeng
  Shenzhen, Guangdong 518057 (CN)

(74) Representative: Reddie & Grose LLP
The White Chapel Building
10 Whitechapel High Street
London E1 8QS (GB)

(54) **OBJECT IDENTIFICATION METHOD, APPARATUS, AND DEVICE, AND STORAGE MEDIUM**

(57)    The present application provides an object identification method, apparatus, and device, and a storage medium, which can be applied to various scenes such as safety protection, cloud technology, artificial intelligence, smart transportation, and assisted driving. The method comprises: an identification device obtaining a distance between an object to be identified and the identification device; if the distance is not equal to a target distance, according to the distance, controlling a wind pressure generator to adjust wind pressure acting on said object, so that under the action of the wind pressure, said object moves to a position at the target distance from the identification device; and identifying said object at the target distance from the identification device to obtain an identification result. According to the embodiments of the present application, the wind pressure acting on said object is determined according to the distance between said object and the identification device. Therefore, said object can obtain an accurate movement distance according to the sensed wind pressure, so that said object can move to the position at the target distance from the identification device by means of a few times of movement, thereby improving the object identification efficiency, and improving the identification experience.

```
┌──────────────────────────────────────────────────────────┐
│ Obtain a distance between a to-be-recognized object and a │──S201
│ recognition device                                        │
└──────────────────────────────────────────────────────────┘
                            │
                            ▼
┌──────────────────────────────────────────────────────────┐
│ If the distance is not equal to a target distance,        │
│ control, according to the distance, a wind pressure       │──S202
│ generator to adjust a wind pressure acting on the         │
│ to-be-recognized object, to cause the to-be-recognized    │
│ object to move to a location having the target distance   │
│ to the recognition device under the action of the         │
│ wind pressure                                             │
└──────────────────────────────────────────────────────────┘
                            │
                            ▼
┌──────────────────────────────────────────────────────────┐
│ Recognize the to-be-recognized object having the target   │──S203
│ distance to the recognition device, to obtain a           │
│ recognition result                                        │
└──────────────────────────────────────────────────────────┘
```

FIG. 2

EP 4 502 960 A1

**Description**

RELATED APPLICATION

This application claims priority to Chinese Patent Application No. 2022107158330, entitled "OBJECT IDENTIFICATION METHOD, APPARATUS, AND DEVICE, AND STORAGE MEDIUM" filed with the China National Intellectual Property Administration on June 22, 2022.

TECHNICAL FIELD

Embodiments of this application relate to the field of recognition technologies, and in particular, to an object recognition method and apparatus, a device, and a storage medium.

BACKGROUND OF THE DISCLOSURE

For some recognition devices, there is an optimal recognition distance. To be specific, when a distance between a to-be-recognized object and a recognition device meets a preset target distance, the recognition device may implement optimal recognition on the to-be-recognized object. For example, the recognition device includes a camera, and the recognition device obtains a recognition result by using an image captured by the camera. In this case, if the to-be-recognized object is excessively far away from the camera, the image captured by the camera is relatively dark and small, and if the to-be-recognized object is excessively close to the camera, the image captured by the camera is over-exposed or cannot be completely captured. It can be learned from this that when the to-be-recognized object is far away from or close to the recognition device, a recognition result is inaccurate. Therefore, to ensure recognition accuracy of the recognition device, the distance between the to-be-recognized object and the recognition device needs to meet the target distance.

Currently, the to-be-recognized object is prompted by using a prompt method such as a sound to move, so that the distance between the to-be-recognized object and the recognition device reaches the target distance. However, in the prompt method, when the to-be-recognized object moves each time, a movement distance cannot be determined, so that the to-be-recognized object needs to move for multiple times to reach the target distance, causing low recognition efficiency.

SUMMARY

This application provides an object recognition method and apparatus, a device, and a storage medium, to control each movement distance of a to-be-recognized object by adjusting a wind pressure acting on the to-be-recognized object, so as to improve recognition efficiency of a recognition device.

According to a first aspect, an embodiment of this application provides an object recognition method, applicable to a recognition device, the recognition device including a wind pressure generator, and the method including:

obtaining a distance between a to-be-recognized object and the recognition device;

when the distance is not equal to a target distance between the to-be-recognized object and the recognition device, controlling the wind pressure generator to adjust a wind pressure acting on the to-be-recognized object, to cause the to-be-recognized object to move to a location having the target distance to the recognition device under the action of the wind pressure, the wind pressure including a negative component and a positive component, the negative component being configured for causing the to-be-recognized object to move toward the recognition device, the positive component being configured for causing the to-be-recognized object to move away from the recognition device; and

when the distance is equal to the target distance, recognizing the to-be-recognized object, to obtain a recognition result.

According to a second aspect, an embodiment of this application provides an object recognition apparatus, applicable to a recognition device, the recognition device including a wind pressure generator, and the apparatus including:

an obtaining unit, configured to obtain a distance between a to-be-recognized object and the recognition device;

an adjustment unit, configured to: when the distance is not equal to a target distance between the to-be-recognized object and the recognition device, control the wind pressure generator to adjust a wind pressure acting on the to-be-recognized object, to cause the to-be-recognized object to move to a location having the target distance to the recognition device under the action of the wind pressure; and

a recognition unit, configured to recognize, when the distance is equal to the target distance, the to-be-recognized object, to obtain a recognition result.

In some embodiments, the adjustment unit is further configured to control the wind pressure generator to adjust the wind pressure acting on the to-be-recognized object; obtain a first distance between the to-be-recognized object on which the wind pressure adjusted acts, and the recognition device; and when the first distance is not equal to the target distance, continue to adjust, according to the first distance, the wind pressure acting on the to-be-recognized object until the first distance between the to-be-recognized object and the recognition device reaches the target distance.

In some embodiments, the adjustment unit is further configured to determine a distance difference between the distance and the target distance; and control, according to the distance difference, the wind pressure generator to adjust the wind pressure acting on the to-be-recognized object.

In some embodiments, the adjustment unit is further configured to: when the distance difference is greater than 0, control the wind pressure generator to adjust the wind pressure acting on the to-be-recognized object to the negative component, to cause the to-be-recognized object to move toward the recognition device under the action of the negative component; or when the distance difference is less than 0, control the wind pressure generator to adjust the wind pressure acting on the to-be-recognized object to the positive component, to cause the to-be-recognized object to move away from the recognition device under the action of the positive component.

In some embodiments, the adjustment unit is further configured to determine a target wind pressure of the wind pressure generator according to the distance difference; and control the wind pressure generator to adjust the wind pressure acting on the to-be-recognized object to the target wind pressure.

In some embodiments, the adjustment unit is further configured to determine a pressure adjustment value for the to-be-recognized object; and determine the target wind pressure according to the distance difference and the pressure adjustment value.

In some embodiments, the adjustment unit is further configured to determine a first wind pressure value according to the distance difference and the pressure adjustment value; determine a second wind pressure value according to a preset sense force and a force bearing area of the to-be-recognized object; and determine the target wind pressure according to the first wind pressure value and the second wind pressure value.

In some embodiments, the adjustment unit is further configured to determine a product of the distance difference and the pressure adjustment value as the first wind pressure value.

In some embodiments, the adjustment unit is further configured to determine a resistance coefficient of the to-be-recognized object; determine a product of the resistance coefficient and the force bearing area of the to-be-recognized object; and determine a ratio of the preset sense force to the product as the second wind pressure value.

In some embodiments, the adjustment unit is further configured to determine a sum of the first wind pressure value and the second wind pressure value as the target wind pressure.

In some embodiments, the adjustment unit is further configured to determine a target wind speed of the wind pressure generator according to the target wind pressure; and control the wind pressure generator to adjust a wind speed of the wind pressure generator to the target wind speed, to control the wind pressure generator to adjust the wind pressure acting on the to-be-recognized object to the target wind pressure.

In some embodiments, the adjustment unit is further configured to obtain a distance between a palm and the recognition device; control, according to the distance, the wind pressure generator to adjust a wind pressure acting on the palm, to cause the palm to move to a location having the target distance to the recognition device under the action of the wind pressure; and recognize the palm having the target distance to the recognition device, to obtain a recognition result of the palm.

According to a third aspect, an embodiment of this application provides a recognition device, including: a wind pressure generator, a processor, and a memory, the memory being configured to store a computer program, and the processor being configured to invoke the computer program stored in the memory and run the computer program, to perform the method according to the first aspect.

According to a fourth aspect, an embodiment of this application provides a computer-readable storage medium, configured to store a computer program, the computer program causing a computer to perform the method according to the first aspect.

According to a fifth aspect, an embodiment of this application provides a chip, configured to perform the method according to any one of the first aspect or the implementations of the first aspect. Specifically, the chip includes: a processor, configured to invoke a computer program from a memory and run the computer program to cause a device in which the chip is installed to perform the method according to any one of the first aspect or implementations of the first aspect.

According to a sixth aspect, an embodiment of this application provides a computer program product, including computer program instructions, and the computer program instructions causing a computer to perform the method according to any one of the first aspect or implementations of the first aspect.

According to a seventh aspect, an embodiment of this application provides a computer program, the computer program, when run on a computer, causing the computer to perform the method according to any one of the first aspect or implementations of the first aspect.

In conclusion, in this application, a recognition device obtains a distance between a to-be-recognized object and the recognition device. When the distance is not equal to a target distance between the to-be-recognized object and the recognition device, the recognition device controls a wind pressure generator to adjust a wind pressure acting on the to-be-recognized object, to cause the to-be-recognized object to move to a location having the target distance to the recognition device under the action of the wind pressure. The wind pressure includes a negative component and a positive component, the negative component is configured for causing the to-be-recognized object to move toward the recognition device, and the positive component is configured for causing the to-be-recognized object to move away from the recognition device. Then, the recognition device recognizes, when the distance is equal to the target distance, the to-be-recognized object, to obtain a recognition result. In the embodiments of this application, the wind pressure acting on the to-be-recognized object is determined according to the distance between the to-be-recognized object and the recognition device. Therefore, an accurate movement distance may be obtained for the to-be-recognized object according to a felt wind pressure. In this way, the to-be-recognized object may move to the target distance through several times of movement, so that object recognition efficiency is improved, and recognition experience is improved.

BRIEF DESCRIPTION OF THE DRAWINGS

To describe the technical solutions in the embodiments of this application more clearly, the accompanying drawings required for describing the embodiments are briefly described hereinafter. Apparently, the accompanying drawings in the following description show merely some embodiments of this application, and a person of ordinary skill in the art may obtain other accompanying drawings from these accompanying drawings without creative efforts.

FIG. 1 is a schematic diagram of a recognition application scenario according to an embodiment of this application.

FIG. 2 is a flowchart of an object recognition method according to an embodiment of this application.

FIG. 3 is a flowchart of an object recognition method according to an embodiment of this application.

FIG. 4 is a schematic diagram of a recognition device according to an embodiment of this application.

FIG. 5 is a flowchart of an object recognition method according to an embodiment of this application.

FIG. 6 is a schematic structural diagram of an object recognition apparatus according to an embodiment of this application.

FIG. 7 is a schematic block diagram of a recognition device according to an embodiment of this application.

DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. All other embodiments obtained by a person skilled in the art based on the embodiments of this application without creative efforts shall fall within the protection scope of this application.

In this specification, the claims, and the accompanying drawings of this application, the terms "first", "second", and so on are intended to distinguish similar objects but do not necessarily indicate a specific order or sequence. The data termed in such a way are interchangeable in proper circumstances so that the embodiments of this application can be implemented in orders except the order illustrated or described herein. Moreover, the terms "include", "contain" and any other variants mean to cover the non-exclusive inclusion. For example, a process, method, system, product, or device that includes a list of operations or units is not necessarily limited to those operations or units, but may include other operations or units not expressly listed or inherent to such a process, method, product, or device.

An object recognition method provided in the embodiments of this application may be applied to any scenario having a requirement on a recognition distance, that is, this application may be applied to any recognition scenario in which a distance between a to-be-recognized object and a recognition device meets a target distance, including but not limited to a cloud technology, artificial intelligence, smart transportation, assisted driving, and the like.

For ease of understanding the embodiments of this application, an application scenario of an embodiment of this application is first described.

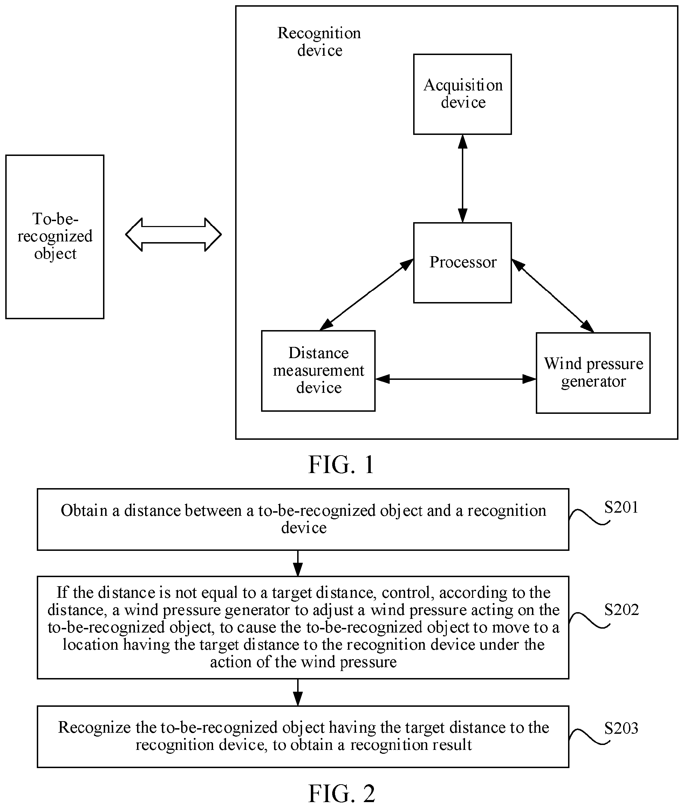

FIG. 1 is a schematic diagram of a recognition application scenario according to an embodiment of this application. As shown in FIG. 1, a to-be-recognized object and a recognition device are included. In some embodiments, as shown in FIG. 1, the recognition device further includes a distance measurement device, an acquisition device, a wind pressure generator, and the like.

FIG. 1 is merely an example, and the shown distance measurement device, acquisition device, and wind pressure generator are all mounted on the recognition device. In some embodiments, at least one of the distance measurement device, the acquisition device, or the wind pressure generator may not be mounted on the recognition device. In other words, specific mounting locations of the distance measurement device, the acquisition device, the wind pressure generator, and the recognition device are not limited in the embodiments of this application, and may be specifically determined according to an actual situation.

The distance measurement device is configured to measure a distance between the to-be-recognized object and the recognition device. A specific type of the distance measurement device is not limited in the embodiments of this application, for example, the distance measurement device may be any distance measurement device such as an infrared distance measurement device, a sound wave distance measurement device, or a radar distance measurement device.

The wind pressure generator is configured to generate a wind pressure acting on the to-be-recognized object. A specific type of the wind pressure generator is not limited in the embodiments of this application. For example, the wind pressure generator includes at least one wind outlet, and outputs, through the wind outlet, a wind of a pressure to act on the to-be-recognized object.

The acquisition device is configured to acquire feature information of the to-be-recognized object, for example, acquire an image of the to-be-recognized object. A specific type of the acquisition device is not limited in the embodiments of this application, for example, the acquisition device may be an acquisition device such as a scanning device or a camera.

The recognition device is configured to analyze the feature information of the to-be-recognized object acquired by the acquisition device, to obtain a recognition result of the to-be-recognized object.

A specific communication connection manner between the distance measurement device, the acquisition device, the wind pressure generator, and the recognition device is not limited in the embodiments of this application.

In some embodiments, if the wind pressure generator has a computing capability, the distance measurement device may be in a communication connection with the wind pressure generator, for example, in a wired or wireless manner. In this way, the distance measurement device may send the measured distance to the wind pressure generator. The wind pressure generator adjusts, according to the measured distance, the wind pressure acting on the to-be-recognized object, to cause the to-be-recognized object to move to a target distance according to the felt wind pressure.

In some embodiments, the distance measurement device is in a communication connection with the recognition device, for example, in a wired or wireless manner. In this way, the distance measurement device may send the measured distance to the recognition device, for example, send the measured distance to a processor in the recognition device. The recognition device determines, according to the measured distance, a wind pressure acting on the to-be-recognized object, and controls the wind pressure generator to output the wind pressure to the to-be-recognized object, to cause the to-be-recognized object to move according to the felt wind pressure, so that the distance between the to-be-recognized object and the recognition device reaches a target distance.

In some embodiments, the recognition device is in a communication connection with the acquisition device, for example, in a wired or wireless manner. When the recognition device determines that a distance between the to-be-recognized object and the recognition device reaches a target distance, the recognition device controls the acquisition device to acquire the feature information of the to-be-recognized object. Then, the acquisition device sends the acquired feature information to the recognition device, for example, to a processor in the recognition device. The processor analyzes the acquired feature information to obtain a final recognition result.

The following describes the technical solutions of the embodiments of this application in detail by using some embodiments. The following several embodiments may be combined with each other, and same or similar concepts or processes may not be repeatedly described in some embodiments.

FIG. 2 is a flowchart of an object recognition method according to an embodiment of this application. As shown in FIG. 2, the method includes the following operations.

S201: Obtain a distance between a to-be-recognized object and a recognition device.

An execution body of this embodiment of this application is an apparatus having a recognition function, which is referred to as a recognition apparatus for short below. The recognition apparatus may be the recognition device shown in FIG. 1 or may be a part of the recognition device shown in FIG. 1, for example, the processor in the recognition device.

For ease of description, an example in which the execution body is the recognition device is used below for

# EP 4 502 960 A1

description.

In this embodiment of this application, in a recognition process, the recognition device obtains a distance between a to-be-recognized object and the recognition device in real time, and controls, by using the distance, a wind pressure generator to adjust, in real time, a wind pressure acting on the to-be-recognized object, to cause the to-be-recognized object to control a movement distance under the action of the wind pressure. In the embodiments of this application, the wind pressure acting on the to-be-recognized object is determined according to the distance between the to-be-recognized object and the recognition device. Therefore, an accurate movement distance may be obtained for the to-be-recognized object according to a felt wind pressure. In this way, the to-be-recognized object may move to the target distance through several times of movement, so that recognition efficiency is improved, and recognition experience is improved.

A specific type of the to-be-recognized object is not limited in the embodiments of this application, and the to-be-recognized object is specifically determined according to an application scenario.

For example, the to-be-recognized object may be a part of an object, for example, a head, a face, or a palm. In some embodiments, the to-be-recognized object may alternatively be an entire object, for example, an entire body.

A manner of waking up the recognition device is not limited in the embodiments of this application.

In some embodiments, the recognition device is started through touch. For example, a power key is mounted on the recognition device, and the recognition device is started by touching the power key. For another example, the recognition device is woken up by touching a touchscreen of the recognition device.

After the recognition device is woken up, a distance measurement device may measure a distance from a to-be-recognized object in front of the recognition device to the recognition device.

In some embodiments, when detecting that the to-be-recognized object is in front of the recognition device and stays in front of the recognition device for preset time, the distance measurement device measures the distance between the to-be-recognized object and the recognition device.

Then, the distance measurement device sends the distance between the to-be-recognized object and the recognition device measured at a current moment to the recognition device.

A specific type of the distance measurement device is not limited in the embodiments of this application, for example, the distance measurement device may be any distance measurement device such as an infrared distance measurement device, a sound wave distance measurement device, or a radar distance measurement device.

S202: If the distance is not equal to a target distance, control, according to the distance, a wind pressure generator to adjust a wind pressure acting on the to-be-recognized object, to cause the to-be-recognized object to move to a location having the target distance to the recognition device under the action of the wind pressure.

After obtaining the distance between the to-be-recognized object and the recognition device at the current moment, the recognition device determines whether the distance between the to-be-recognized object and the recognition device at the current moment is equal to a preset target distance. If the distance between the to-be-recognized object and the recognition device at the current moment is equal to the target distance, the to-be-recognized object is directly recognized, to obtain a recognition result. For example, if the distance between the to-be-recognized object and the recognition device at the current moment is equal to the target distance, the recognition device controls an acquisition device to acquire feature information of the to-be-recognized object. Then, the acquisition device sends the acquired feature information to the recognition device for analysis, to obtain the recognition result.

If the distance between the to-be-recognized object and the recognition device at the current moment is not equal to the target distance, the recognition device controls, according to the distance between the to-be-recognized object and the recognition device at the current moment, a wind pressure generator to adjust a wind pressure acting on the to-be-recognized object, to cause the to-be-recognized object to move according to the felt wind pressure until a distance between the to-be-recognized object and the recognition device reaches the target distance.

In the embodiments of this application, the wind pressure acting on the to-be-recognized object is determined according to the distance between the to-be-recognized object and the recognition device at the current moment.

For example, when the to-be-recognized object is far away from the recognition device, the wind pressure generator is controlled to generate a relatively large negative wind pressure. The negative wind pressure may be understood as a wind pressure for pulling the to-be-recognized object close to the recognition device. In this way, the to-be-recognized object moves in a direction close to the recognition device under the action of the negative wind pressure. When the to-be-recognized object moves to the recognition device, the wind pressure felt by the to-be-recognized object gradually decreases, and when the to-be-recognized object moves to feel no wind pressure, the to-be-recognized object stops moving.

For another example, when the to-be-recognized object is close to the recognition device, the wind pressure generator is controlled to generate a relatively large positive wind pressure. The positive wind pressure may be understood as a wind pressure for pushing the to-be-recognized object away from the recognition device. In this way, the to-be-recognized object moves in a direction away from the recognition device under the action of the positive wind pressure. When the to-be-recognized object moves in the direction away from the recognition device, the wind pressure felt by the to-

6

be-recognized object gradually decreases, and when the to-be-recognized object moves to feel no wind pressure, the to-be-recognized object stops moving.

Generally, the to-be-recognized object may basically move to the target distance in one moving process according to the wind pressure. Therefore, in some embodiments, in this case, the recognition device directly recognizes the to-be-recognized object without measuring a distance between the to-be-recognized object after movement and the recognition device.

In some embodiments, to further improve recognition accuracy, after the to-be-recognized object moves each time, a distance between the to-be-recognized object and the recognition device is measured. In this case, the controlling, according to the distance, a wind pressure generator to adjust a wind pressure acting on the to-be-recognized object, so that the distance between the to-be-recognized object and the recognition device reaches the target distance in S202 may include the following operations.

S202-A: Control, according to the distance, the wind pressure generator to adjust the wind pressure acting on the to-be-recognized object.

S202-B: Obtain a distance between the to-be-recognized object and the recognition device when an adjusted wind pressure acts on the to-be-recognized object.

S202-C: If the distance is not equal to the target distance, continue to control, according to the distance, the wind pressure generator to adjust the wind pressure acting on the to-be-recognized object until a distance between the to-be-recognized object and the recognition device reaches the target distance.

In this embodiment, the recognition device monitors a distance between the to-be-recognized object and the recognition device in real time, and adjusts, according to the distance monitored in real time, the wind pressure acting on the to-be-recognized object in real time until a distance between the to-be-recognized object and the recognition device reaches the target distance.

For example, the distance measurement device obtains a distance 1 between the to-be-recognized object and the recognition device through measurement at a moment 11, and sends the distance 1 to the recognition device, so that the recognition device determines whether the distance 1 is equal to the target distance. If the distance 1 is equal to the target distance, the to-be-recognized object is directly recognized. If the distance 1 is not equal to the target distance, the wind pressure generator is controlled to adjust the outputted wind pressure to a wind pressure 1 according to the distance 1. The to-be-recognized object moves to a location 1 under the action of the wind pressure 1. Then, the distance measurement device measures a distance 2 between the to-be-recognized object at the location 1 and the recognition device, and sends the distance 2 to the recognition device, so that the recognition device determines whether the distance 2 is equal to the target distance. If the distance 2 is equal to the target distance, the to-be-recognized object is directly recognized. If the distance 2 is not equal to the target distance, the wind pressure generator continues to be controlled to adjust the outputted wind pressure to a wind pressure 2 according to the distance 2. The to-be-recognized object moves to a location 2 under the action of the wind pressure 2. The distance measurement device measures a distance 3 between the to-be-recognized object at the location 2 and the recognition device. The process is repeated, until a distance between the to-be-recognized object and the recognition device reaches the target distance.

In this embodiment, after the to-be-recognized object moves each time, it is determined whether a distance between the to-be-recognized object after movement and the recognition device is equal to the target distance. If the distance is not equal to the target distance, the wind pressure generator continues to be controlled, according to the distance between the to-be-recognized object after movement and the recognition device, to adjust the wind pressure acting on the to-be-recognized object, to cause the to-be-recognized object to continue to move under the action of the wind pressure until a distance between the to-be-recognized object and the recognition device reaches the target distance, so that it is ensured that the to-be-recognized object finally moves to the target distance and the recognition accuracy is improved.

A specific manner of adjusting, according to the distance, the wind pressure acting on the to-be-recognized object is not limited in the embodiments of this application.

In some embodiments, if the to-be-recognized object is far away from or close to the recognition device, the wind pressure generator may be controlled to first apply a relatively large wind pressure to the to-be-recognized object, to cause the to-be-recognized object to move to a preset location range. If the to-be-recognized object moves to the preset location range, a distance between the to-be-recognized object and the recognition device is close to the target distance. Then, the distance between the to-be-recognized object in the preset location range and the recognition device is measured, and the wind pressure generator is controlled, according to the distance, to finely adjust the wind pressure acting on the to-be-recognized object, to cause the to-be-recognized object to move to the target distance under the action of the finely adjusted wind pressure. In other words, in this embodiment, the wind pressure acting on the to-be-recognized object is coarsely adjusted and finely adjusted according to the distance between the to-be-recognized object and the recognition device, so that the to-be-recognized object moves rapidly to a location having the target distance to the recognition device, to improve a movement speed of the to-be-recognized object.

In some embodiments, the adjusting, according to the distance, the wind pressure acting on the to-be-recognized object may further include the following operations.

S202-A1: Determine a distance difference between the distance and the target distance.

S202-A2: Control, according to the distance difference, the wind pressure generator to adjust the wind pressure acting on the to-be-recognized object.

In this embodiment, a distance difference between the target distance and a distance between the to-be-recognized object and the recognition device measured at a current moment is calculated. Then, the wind pressure generator is controlled, according to the distance difference, to adjust the wind pressure acting on the to-be-recognized object.

A specific manner of controlling, according to the distance difference, the wind pressure generator to adjust the wind pressure acting on the to-be-recognized object in S202-A2 is not limited in the embodiments of this application.

In some embodiments, a correspondence between a preset wind pressure level and the distance difference is obtained. The correspondence may be obtained through experimental measurement. In this way, a level corresponding to the distance difference at the current moment may be determined according to the distance difference between the target distance and the distance between the to-be-recognized object and the recognition device measured at the current moment, and then the wind pressure generator is controlled to adjust the wind pressure to the corresponding level.

In an example, a level of a wind pressure corresponds to a fixed distance difference, for example, a level of a wind pressure corresponds to a distance difference a. In this way, if the distance difference between the target distance and the distance between the to-be-recognized object and the recognition device measured at the current moment is a distance difference b, and the distance difference b is c times the distance difference a, the wind pressure generator is controlled to adjust a level of the outputted wind pressure at the current moment to a level c.

In another example, different distances correspond to different wind pressure levels. For example, a correspondence between a wind pressure level and a distance difference is shown in Table 1.

Table 1

| Wind pressure level | Distance difference |
|---|---|
| Level 1 | Distance difference 1 |
| Level 2 | Distance difference 2 |
| ... | ... |
| Level n | Distance difference n |

In Table 1, the distance difference indicates a distance difference between the target distance and the distance between the to-be-recognized object and the recognition device. If the distance difference is greater than 0, the distance between the to-be-recognized object and the recognition device is greater than the target distance. If the distance difference is less than 0, the distance between the to-be-recognized object and the recognition device is less than the target distance. In Table 1, different distance differences correspond to different wind pressure levels. In this way, a corresponding wind pressure level may be found in Table 1 according to a distance difference determined at the current moment, and then a level of the wind pressure generator is adjusted to the found wind pressure level.

In some embodiments, a level corresponding to a distance difference greater than 0 in Table 1 is a level corresponding to a negative wind pressure. To be specific, if a distance from the to-be-recognized object to the recognition device at the current moment is greater than the target distance, a level corresponding to a distance difference is found in Table 1 according to the distance difference at the current moment. When the wind pressure generator is adjusted according to the level, the wind pressure generator outputs a negative wind pressure, so that the to-be-recognized object moves toward the recognition device under the action of the negative wind pressure. A level corresponding to a distance difference less than 0 in Table 1 is a level corresponding to a positive wind pressure. To be specific, if a distance from the to-be-recognized object to the recognition device at the current moment is less than the target distance, a level corresponding to a distance difference is found in Table 1 according to the distance difference at the current moment. When the wind pressure generator is adjusted according to the level, the wind pressure generator outputs a positive wind pressure, so that the to-be-recognized object moves away from the recognition device under the action of the positive wind pressure. In other words, in the embodiment shown in Table 1, when the wind pressure acting on the to-be-recognized object is adjusted according to the distance difference, a corresponding wind pressure level is directly found in Table 1 without considering a case in which the distance difference is greater than 0 or less than 0, and the wind pressure outputted by the wind pressure generator is adjusted according to the found wind pressure level,

In some embodiments, the wind pressure generator is controlled to adjust, depending on whether the distance difference is greater than 0 or less than 0, the wind pressure acting on the to-be-recognized object.

For example, if the distance difference is greater than 0, the wind pressure generator is controlled to adjust the wind pressure acting on the to-be-recognized object to the negative wind pressure, to cause the to-be-recognized object to move toward the recognition device.

For another example, if the distance difference is less than 0, the wind pressure generator is controlled to adjust the wind pressure acting on the to-be-recognized object to the positive wind pressure, to cause the to-be-recognized object to move away from the recognition device.

In this embodiment, the wind pressure generator is controlled to adjust, depending on whether the distance difference is greater than 0 or less than 0, the wind pressure acting on the to-be-recognized object.

In an example, if the distance difference is greater than 0, the distance from the to-be-recognized object to the recognition device at the current moment is greater than the target distance. In this case, the wind pressure generator is controlled to output the negative wind pressure acting on the to-be-recognized object, to cause the to-be-recognized object to move in a direction close to the recognition device under the action of the negative wind pressure, so that the distance between the to-be-recognized object and the recognition device is equal to the target distance. In this embodiment, the negative wind pressure outputted by the wind pressure generator may be adjusted to different levels according to the distance difference. For example, a correspondence between the distance difference and different levels of the negative wind pressure shown in Table 1 is first determined, a level of a negative wind pressure corresponding to a distance difference is obtained by querying the table according to the distance difference at a current moment, and the wind pressure generator is adjusted according to the level of the negative wind pressure, so that the wind pressure generator outputs the negative wind pressure, to cause the to-be-recognized object to move toward the recognition device under the action of the negative wind pressure. Certainly, the negative wind pressure acting on the to-be-recognized object may alternatively be adjusted in another adjustment manner. This is not limited in the embodiments of this application.

In another example, if the distance difference is less than 0, the distance from the to-be-recognized object to the recognition device at the current moment is less than the target distance. In this case, the wind pressure generator is controlled to output the positive wind pressure acting on the to-be-recognized object, to cause the to-be-recognized object to move in a direction away from the recognition device under the action of the positive wind pressure, so that the distance between the to-be-recognized object and the recognition device is equal to the target distance. In this embodiment, the positive wind pressure outputted by the wind pressure generator may be adjusted to different levels according to the distance difference. For example, a correspondence between the distance difference and different levels of the positive wind pressure shown in Table 1 is first determined, a level of a positive wind pressure corresponding to a distance difference is obtained by querying the table according to the distance difference at a current moment, and the wind pressure generator is adjusted according to the level of the positive wind pressure, so that the wind pressure generator outputs the positive wind pressure, to cause the to-be-recognized object to move away from the recognition device under the action of the positive wind pressure. Certainly, the positive wind pressure acting on the to-be-recognized object may alternatively be adjusted in another adjustment manner. This is not limited in the embodiments of this application.

In some embodiments, the wind pressure acting on the to-be-recognized object may be further adjusted according to the following operations S202-A21 and S202-A22.

S202-A21: Determine a target wind pressure according to the distance difference.

S202-A22: Control the wind pressure generator to adjust the wind pressure acting on the to-be-recognized object to the target wind pressure.

In this embodiment, a target wind pressure acting on the to-be-recognized object is directly determined according to the distance difference at the current moment, so as to control the wind pressure generator to adjust the wind pressure acting on the to-be-recognized object to the target wind pressure. In other words, in this implementation, the target wind pressure is directly determined according to the distance difference, instead of determining the wind pressure level, and the correspondence shown in Table 1 does not need to be determined, thereby reducing recognition complexity.

A specific manner of determining the target wind pressure according to the distance difference in this embodiment of this application includes but is not limited to the following several manners.

Manner 1: The distance difference is multiplied by a preset value to obtain a product, and the product is determined as the target wind pressure, or the product is processed, for example, the product is corrected to obtain the target wind pressure. The preset value may be understood as a wind pressure adjustment amount corresponding to a distance difference of a unit (for example, 1m). In some embodiments, the preset value may be obtained through an experiment, or may be an empirical value. In this way, the target wind pressure may be determined according to the product of the distance difference at the current moment and the preset value.

Manner 2: A pressure adjustment value may be determined, and the target wind pressure may be determined according to the distance difference and the pressure adjustment value.

The pressure adjustment value may be an adjustment pressure that can be felt by actually testing a force of a person.

In an example, the pressure adjustment value is a fixed value.

In another example, the pressure adjustment value is determined according to an attribute corresponding to the to-be-recognized object. For example, assuming that the to-be-recognized object is a palm, a size of a palm of an adult and a feeling of the adult on a force are different from a size of a palm of a minor and a feeling of the minor on a force. Therefore, a pressure adjustment value is set for the adult, and a pressure adjustment value is set for the minor. In some embodiments, a more detailed division may alternatively be implemented for different attributes, for example, different pressure adjustment values are set for different ages and different genders. In this way, the pressure adjustment value corresponding to the to-be-recognized object may be determined according to the attribute corresponding to the to-be-recognized object. When the target wind pressure is determined according to the pressure adjustment value corresponding to the to-be-recognized object and the distance difference, accuracy of determining the target wind pressure can be improved.

A specific manner of determining the target wind pressure according to the distance difference and the pressure adjustment value in the manner 2 is not limited in the embodiments of this application.

In a possible implementation, a product of the distance difference and the pressure adjustment value is determined as the target wind pressure.

In another possible implementation, a first wind pressure value is first determined according to the distance difference and the pressure adjustment value. A second wind pressure value is determined according to a preset sense force and a force bearing area of the to-be-recognized object. The target wind pressure is determined according to the first wind pressure value and the second wind pressure value.

In this implementation, in a process of determining the target wind pressure, a wind pressure required for overcoming resistance of the to-be-recognized object is considered. In this embodiment, the wind pressure required for overcoming the resistance of the to-be-recognized object is denoted as a second wind pressure. In this way, when the target wind pressure is determined, the first wind pressure value is first determined according to the distance difference and the pressure adjustment value. For example, a product of the distance difference and the pressure adjustment value is determined as the first wind pressure value, or a product of the distance difference and the pressure adjustment value is adjusted by multiplying or dividing a coefficient, and an adjusted product is determined as the first wind pressure value.

Then, the second wind pressure value is determined according to the preset sense force and the force bearing area of the to-be-recognized object. A specific magnitude of the preset sense force is not limited in the embodiments of this application, for example, the preset sense force is equal to a reverse force of gravity of the to-be-recognized object. For example, when the to-be-recognized object is a palm, the sense force is a sense force a force of a person when the palm is horizontally placed. In an example, the sense force is a fixed value. In an example, the sense force may be determined according to the attribute corresponding to the to-be-recognized object. For example, assuming that the to-be-recognized object is a palm, a size of a palm of an adult and a feeling of the adult on a force are different from a size of a palm of a minor and a feeling of the minor on a force. Therefore, a sense force is set for the adult, and a sense force is set for the minor. In some embodiments, a more detailed division may alternatively be implemented for different attributes, for example, different sense forces are set for different ages and different genders. In this way, the sense force corresponding to the to-be-recognized object may be determined according to the attribute corresponding to the to-be-recognized object. When the second wind pressure value is determined according to the sense force corresponding to the to-be-recognized object and the force bearing area of the to-be-recognized object, accuracy of determining the second wind pressure value can be improved.

A specific manner of determining the second wind pressure value according to the preset sense force and the force bearing area of the to-be-recognized object is not limited in the embodiments of this application.

In an example, a ratio of the sense force to the force bearing area of the to-be-recognized object is determined as the second wind pressure value.

In another example, a resistance coefficient corresponding to the to-be-recognized object is determined. A product of the resistance coefficient and the force bearing area of the to-be-recognized object is determined. A ratio of the sense force to the product is determined as the second wind pressure value. The resistance coefficient is configured for indicating that when the to-be-recognized object moves relative to air in the air, the to-be-recognized object is subject to resistance of the air. A specific manner of determining the resistance coefficient corresponding to the to-be-recognized object is not limited in the embodiments of this application, and the resistance coefficient may be obtained through calculation with reference to any existing manner of calculating the resistance coefficient.

The first wind pressure value and the second wind pressure value are determined according to the foregoing operations, and the target wind pressure is determined according to the first wind pressure value and the second wind pressure value. For example, a sum of the first wind pressure value and the second wind pressure value is determined as the target wind pressure. For another example, different weights are set for the first wind pressure value and the second wind pressure value, and the first wind pressure value and the second wind pressure value are weighted, to obtain the target wind pressure. Alternatively, another similar method may be used to process the first wind pressure value and the second wind pressure value to obtain the target wind pressure. A specific manner of determining the target wind pressure according to the first wind pressure value and the second wind pressure value is not limited in the embodiments of this application.

In an example, the target wind pressure is determined according to the following Formula (1):

$$P=L*Fa+(f/(A*Cd)) \qquad (1)$$

P is the target wind pressure, L*Fa is the first wind pressure value, and f/(A*Cd) is the second wind pressure value. L is the distance difference, Fa is the pressure adjustment value, f is the sense force, A is the force bearing area of the to-be-recognized object, Cd is the resistance coefficient corresponding to the to-be-recognized object, "*" represents a multiple sign, and "/" represents a division sign.

In this embodiment, after the target wind pressure is determined according to the foregoing operations, the wind pressure generator is controlled to adjust the wind pressure acting on the to-be-recognized object to the target wind pressure.

A specific manner of controlling the wind pressure generator to adjust the wind pressure acting on the to-be-recognized object to the target wind pressure is not limited in the embodiments of this application and is specifically determined in a wind pressure adjustment manner of the wind pressure generator.

In some embodiments, if the wind pressure generator may directly adjust the outputted wind pressure according to the target wind pressure, the recognition device may directly control the wind pressure generator to output the target wind pressure. For example, the recognition device sends the target wind pressure to the wind pressure generator, and a controller in the wind pressure generator controls the wind pressure generator to output the target wind pressure.

In some embodiments, the wind pressure generator adjusts the outputted wind pressure by adjusting an outputted wind speed. In this case, the controlling the wind pressure generator to adjust the wind pressure acting on the to-be-recognized object to the target wind pressure includes: determining a target wind speed according to the target wind pressure; and controlling the wind pressure generator to adjust a wind speed to the target wind speed, to control the wind pressure generator to adjust the wind pressure acting on the to-be-recognized object to the target wind pressure.

There is a correspondence between a wind pressure and a wind speed. For example, Table 2 shows a wind scale, wind speed, and wind pressure correspondence table.

Table 2

| Wind scale, wind speed, and wind pressure correspondence table | | | | | | |
|---|---|---|---|---|---|---|
| Wind scale | Name | Wind speed | | Wind pressure WO=V2/16(kg/m2), 10N/m2 | Sign of an object on a land surface | Sea state |
| | | km/h | (m/s) | | | |
| 0 | Calm | <1 | 0 to 0.2 | 0 to 0.0025 | Still | Still |
| 1 | Soft wind | 1 to 5 | 0.3 to 1.5 | 0.0056 to 0.014 | Smoke can indicate a direction, but a wind vane is still. | Ripple |
| 2 | Light wind | 6 to 11 | 1.6 to 3.3 | 0.016 to 0.68 | People feel wind, and the wind vane rotates. | Wavelet |
| 3 | Breeze | 12 to 19 | 3.4 to 5.4 | 0.72 to 1.82 | Leaves and twigs shake, and flags unfurl. | Wavelet |
| 4 | Gentle breeze | 20 to 28 | 5.5 to 7.9 | 1.89 to 3.9 | Paper and dust can be blown up from the ground. | Slight sea |
| 5 | Cool breeze | 29 to 38 | 8.0 to 10.7 | 4 to 7.16 | Small tree with leaves sways. | Moderate sea |
| 6 | Strong breeze | 39 to 49 | 10.8 to 13.8 | 7.29 to 11.9 | Twigs sway and wires whir. | Heavy sea |
| 7 | Moderate gale | 50 to 61 | 13.9 to 17.1 | 12.08 to 18.28 | Whole tree shakes, and it is difficult to walk against the wind. | Very rough sea |
| 8 | Gale | 62 to 74 | 17.2 to 20.7 | 18.49 to 26.78 | A small branch is broken, and there is large resistance for people to move forward. | High sea |

In some embodiments, the target wind speed corresponding to the target wind pressure may be found in Table 2 according to the correspondence between the wind pressure and the wind speed shown in Table 2.

In some embodiments, the corresponding target wind speed may be calculated by using the target wind pressure.

The wind pressure is a pressure of a wind on a plane perpendicular to a direction of an air flow. A relationship between the wind pressure and the wind speed is obtained according to a Bernoulli equation. The wind pressure is also referred to as a velocity pressure of the wind.

In an example, the relationship between the wind pressure and the wind speed is shown in Formula (2):

$$P=0.5 \cdot \rho \cdot v^2 \qquad (2)$$

P is the wind pressure [kN/m2], $\rho$ is air density [kg/m3], and v is the wind speed [m/s]. Because a relationship between the air density ($\rho$) and a weight (r) is t=$\rho \cdot$g, there is $\rho$=r/g. The relationship is used in Formula (2), to obtain the relationship between the wind pressure and the wind speed shown in Formula (3):

$$P=0.5 \cdot r \cdot v^2/g \qquad (3)$$

In a standard state (an air pressure is 1013 hPa, and a temperature is 15°C), an air weight r=0.01225 [kN/m3]. A gravity acceleration g=9.8[m/s2] at a latitude of 45°. Therefore, the relationship between the wind pressure and the wind speed may be simplified as Formula (4):

$$P=v^2/1600 \qquad (4)$$

The air weight and the gravity acceleration vary with a latitude and an altitude. Generally, $\rho$ is smaller on the plateau than on the plain, that is, the wind pressure generated at a same wind speed at the same temperature is smaller on the plateau than on the plain.

In this way, the target wind speed corresponding to the target wind pressure may be calculated according to the relationship between the wind pressure and the wind speed shown in Formula (2) to Formula (4), to control the wind pressure generator to adjust the wind speed of the wind pressure generator to the target wind speed, so as to adjust the wind pressure outputted by the wind pressure generator.

In this embodiment of this application, if the distance between the to-be-recognized object and the recognition device is not equal to the target distance, according to the method, the wind pressure generator is controlled, based on the distance, to adjust the wind pressure acting on the to-be-recognized object, so that the distance between the to-be-recognized object and the recognition device reaches the target distance.

In some embodiments, on the basis of controlling, according to the distance, the wind pressure generator to adjust the wind pressure acting on the to-be-recognized object, a sound may be further used to assist in indicating the distance. For example, when the to-be-recognized object is far away from the recognition device, that is, when the distance difference between the target distance and the distance between the to-be-recognized object and the recognition device is greater than 0, the recognition device outputs a sound at a first frequency, to indicate to the to-be-recognized object to move toward the recognition device. When the to-be-recognized object is close to the recognition device, that is, when the distance difference between the target distance and the distance between the to-be-recognized object and the recognition device is less than 0, the recognition device outputs a sound at a second frequency, to indicate to the to-be-recognized object to move away from the recognition device. In this way, on the basis of controlling, according to the distance, the wind pressure generator to adjust the wind pressure, the recognition device indicates the distance between the to-be-recognized object and the recognition device with reference to a sound, so that the to-be-recognized object can further rapidly move to the target distance, and recognition efficiency is further improved.

S203: Recognize the to-be-recognized object having the target distance to the recognition device, to obtain a recognition result.

For example, when it is determined that the distance from the to-be-recognized object to the recognition device is the target distance, the acquisition device is controlled to acquire feature information of the to-be-recognized object, to obtain the feature information of the to-be-recognized object. Then, the feature information of the to-be-recognized object is recognized, to obtain a recognition result.

In an example, if the to-be-recognized object is a palm, when it is determined that the palm is located at the target distance, the acquisition device (for example, a camera) is controlled to acquire an image of the palm. Then, the acquired image of the palm is analyzed, for example, the image of the palm is compared with a stored image of a palm. If the acquired image of the palm matches a stored image of a palm, the recognition result is success. If the acquired image of the palm matches a stored image of each palm, the recognition result is failure.

According to the object recognition method provided in the embodiments of this application, a recognition device obtains a distance between a to-be-recognized object and the recognition device. If the distance is not equal to a target distance, the recognition device controls, according to the distance, a wind pressure generator to adjust a wind pressure acting on the to-be-recognized object, to cause the to-be-recognized object to move to a location having the target distance to the recognition device under the action of the wind pressure. The wind pressure includes a negative wind pressure and a positive wind pressure, the negative wind pressure is configured for causing the to-be-recognized object to move toward the recognition device, and the positive wind pressure is configured for causing the to-be-recognized object to move away from the recognition device; and Finally, the recognition device recognizes the to-be-recognized object having the target distance to the recognition device, to obtain a recognition result. In the embodiments of this application, the wind pressure acting on the to-be-recognized object is determined according to the distance between the to-be-recognized object and the recognition device. Therefore, an accurate movement distance may be obtained for the to-be-recognized object according to a felt wind pressure. In this way, the to-be-recognized object may move to the target distance through several times of movement, so that object recognition efficiency is improved, and recognition experience is improved.

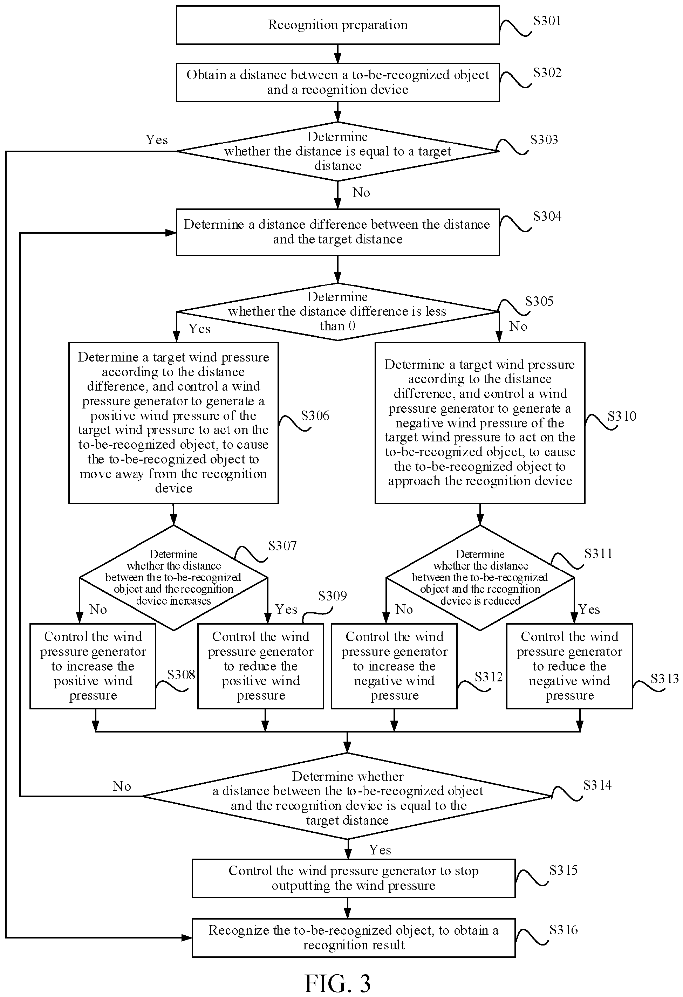

FIG. 3 is a flowchart of an object recognition method according to an embodiment of this application. As shown in FIG. 3, the method includes the following operations.

S301: Recognition preparation.

In this embodiment of this application, the recognition preparation may be understood as starting a recognition device, and a to-be-recognized object is directly in front of the recognition device.

S302: Obtain a distance between a to-be-recognized object and a recognition device.

For example, the recognition device controls a distance measurement device to measure the distance between the to-be-recognized object and the recognition device.

S303: Determine whether the distance is equal to a target distance.

If the distance is equal to the target distance, operation S316 is performed.

If the distance is not equal to the target distance, operation S304 is performed.

S304: Determine a distance difference between the distance and the target distance.

S305: Determine whether the distance difference is less than 0.

If the distance difference is less than 0, operation S306 to operation S309 are performed.

If the distance difference is greater than 0, operation S310 to operation S313 are performed.

S306: Determine a target wind pressure according to the distance difference, and control a wind pressure generator to generate a positive wind pressure of the target wind pressure to act on the to-be-recognized object, to cause the to-be-recognized object to move away from the recognition device.

If the distance difference is less than 0, the to-be-recognized object is close to the recognition device. In this case, the positive wind pressure needs to be generated, to cause the to-be-recognized object to move away from the recognition device.

A specific manner of determining the target wind pressure according to the distance difference is not limited in the embodiments of this application.

For example, a pressure adjustment value is determined. The target wind pressure is determined according to the distance difference and the pressure adjustment value. For example, a first wind pressure value is determined according to the distance difference and the pressure adjustment value. A second wind pressure value is determined according to a preset sense force and a force bearing area of the to-be-recognized object. The target wind pressure is determined according to the first wind pressure value and the second wind pressure value.

For the specific manner of determining the target wind pressure according to the distance difference, reference may be made to the specific implementation of S202-A1. Details are not described herein again.

After determining the target wind pressure, the recognition device controls the wind pressure generator to output the positive wind pressure whose value is the target wind pressure to act on the to-be-recognized object, to cause the to-be-recognized object to move away from the recognition device.

S307: Determine whether the distance between the to-be-recognized object and the recognition device increases.

In this embodiment of this application, a distance between the to-be-recognized object and the recognition device is monitored in real time, and the wind pressure generator is controlled to adjust the wind pressure according to the distance in real time. For example, it is determined whether the distance between the to-be-recognized object and the recognition device increases. If the distance increases, operation S309 is performed, and the wind pressure generator is controlled to reduce the positive wind pressure. If the distance between the to-be-recognized object and the recognition device does not increase, operation S308 is performed, and the wind pressure generator is controlled to increase the positive wind pressure.

S308: Control the wind pressure generator to increase the positive wind pressure.

S309: Control the wind pressure generator to reduce the positive wind pressure.

S310: Determine a target wind pressure according to the distance difference, and control a wind pressure generator to generate a negative wind pressure of the target wind pressure to act on the to-be-recognized object, to cause the to-be-recognized object to move toward the recognition device.

If the distance difference is greater than 0, the to-be-recognized object is far away from the recognition device. In this case, the wind pressure generator is controlled to generate a negative wind pressure, to cause the to-be-recognized object to move toward the recognition device.

In this embodiment of this application, for the specific manner of determining the target wind pressure according to the distance difference, reference may be made to the specific implementation of S202-A1. Details are not described herein again.

After determining the target wind pressure, the recognition device controls the wind pressure generator to output the negative wind pressure whose value is the target wind pressure to act on the to-be-recognized object, to cause the to-be-recognized object to move toward the recognition device.

S311: Determine whether the distance between the to-be-recognized object and the recognition device is reduced.

In this embodiment of this application, a distance between the to-be-recognized object and the recognition device is monitored in real time, and the wind pressure generator is controlled to adjust the wind pressure according to the distance in real time. For example, it is determined whether the distance between the to-be-recognized object and the recognition device is reduced. If the distance is reduced, operation S313 is performed, and the wind pressure generator is controlled to reduce the negative wind pressure. If the distance between the to-be-recognized object and the recognition device is not reduced, operation S312 is performed, and the wind pressure generator is controlled to increase the negative wind pressure.

S312: Control the wind pressure generator to increase the negative wind pressure.

S313: Control the wind pressure generator to reduce the negative wind pressure.

In some embodiments, on the basis of adjusting the wind pressure acting on the to-be-recognized object according to the distance, a sound may be further used to assist in indicating the distance. For example, when the distance difference is greater than 0, a sound at a first frequency is output, to indicate to the to-be-recognized object to move toward the recognition device. If the distance difference is less than 0, a sound at a second frequency is output, to indicate to the to-be-recognized object to move away from the recognition device. In this way, on the basis of adjusting the wind pressure according to the distance, the distance between the to-be-recognized object and the recognition device is indicated with reference to a sound, so that the to-be-recognized object can further rapidly move to the target distance, and recognition efficiency is further improved.

S314: Determine whether the distance between the to-be-recognized object and the recognition device is equal to the target distance.

After the foregoing adjustment, it is determined whether the distance between the to-be-recognized object and the recognition device is equal to the target distance after the to-be-recognized object moves. In this case, when the distance between the to-be-recognized object and the recognition device is equal to the target distance, the following operation S315 and operation S316 are performed.

If the distance between the to-be-recognized object and the recognition device is not equal to the target distance, operation S304 is returned.

S315: Control the wind pressure generator to stop outputting the wind pressure.

S316: Recognize the to-be-recognized object, to obtain a recognition result.

A specific implementation of S316 is the same as the specific implementation of S203. Details are not described herein again.

In the embodiments of this application, a distance between a to-be-recognized object and a recognition device is measured in real time, and a wind pressure generator is controlled, according to the real-time measured distance, to adjust a wind pressure acting on the to-be-recognized object in real time, to cause the to-be-recognized object to move quickly and accurately to the recognition device, thereby improving recognition efficiency and recognition accuracy.

An example in which the to-be-recognized object is a palm is used to describe the object recognition method provided in the embodiments of this application below.

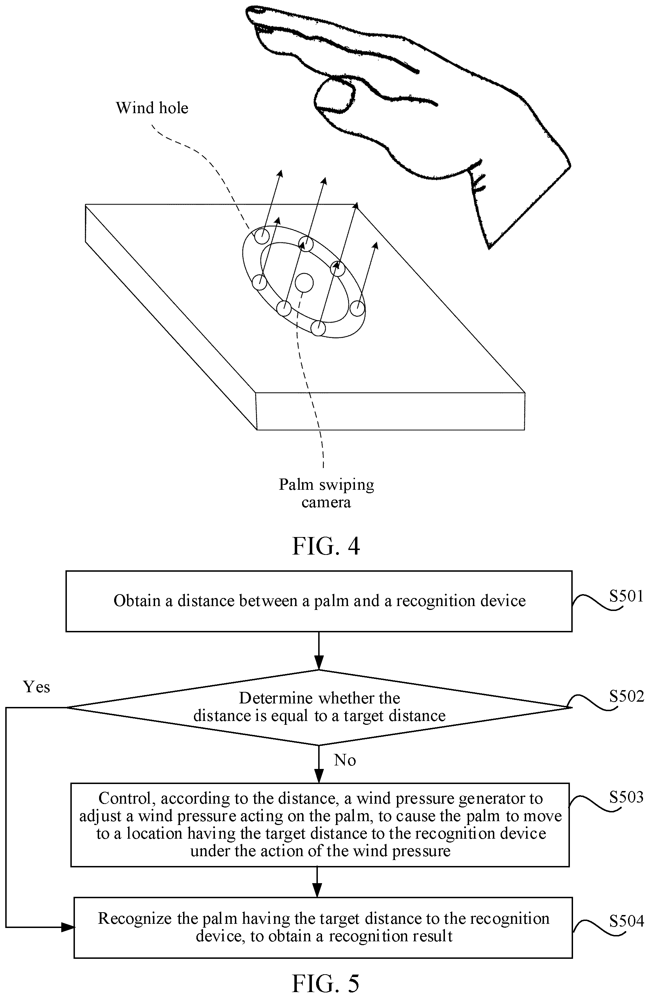

FIG. 4 is a schematic diagram of a recognition device according to an embodiment of this application. As shown in FIG. 4, the recognition device may be referred to as a palm swiping device. The recognition device includes a wind pressure generator and a palm swiping camera. The wind pressure generator includes a plurality of wind outlets. For example, the wind outlets of the wind pressure generator are located around the palm swiping device.

FIG. 5 is a flowchart of an object recognition method according to an embodiment of this application. As shown in FIG. 5, the method includes the following operations.

S501: Obtain a distance between a palm and a recognition device.

For a specific implementation process of S501, reference is made to the descriptions of S201. Details are not described herein again.

S502: Determine whether the distance is equal to a target distance.

If the distance is equal to the target distance, operation S504 is performed.

If the distance is not equal to the target distance, operation S503 is performed.

S503: Control, according to the distance, a wind pressure generator to adjust a wind pressure acting on the palm, to cause the palm to move to a location having the target distance to the recognition device under the action of the wind pressure.

For example, a distance difference between the distance and the target distance is determined. The wind pressure generator is controlled, according to the distance difference, to adjust the wind pressure acting on the to-be-recognized object.

For example, if the distance difference is greater than 0, the wind pressure generator is controlled to adjust the wind pressure acting on the palm to a negative wind pressure, to cause the to-be-recognized object to move toward the recognition device.

For another example, if the distance difference is less than 0, the wind pressure generator is controlled to adjust the wind pressure acting on the palm to a positive wind pressure, to cause the to-be-recognized object to move away from the recognition device.

In some embodiments, on the basis of adjusting the wind pressure according to the distance difference, a sound may be further used to assist in indicating the distance. For example, if the distance difference is greater than 0, the recognition device sends a sound at a first frequency, to indicate to the palm to move toward the recognition device. If the distance difference is less than 0, the recognition device sends a sound at a second frequency, to indicate to the palm to move away from the recognition device. In this way, on the basis of adjusting the wind pressure according to the distance, the distance between the palm and the recognition device is indicated with reference to a voice, so that the palm can further rapidly move to the target distance, and recognition efficiency is further improved.

S504: Recognize the palm having the target distance to the recognition device, to obtain a recognition result.

For example, if the recognition device determines that the distance between the palm and the recognition device is the target distance, the recognition device controls the palm swiping camera to be started, so as to acquire an image of the palm, and further analyze the acquired image of the palm, to obtain a recognition result.

In this embodiment of this application, the wind pressure generator is controlled, by using the distance between the palm and the recognition device, to adjust the wind pressure acting on the palm, to cause the to-be-recognized object to move under the action of the wind pressure, so that the distance between the to-be-recognized object and the recognition device reaches the target distance, and palm swiping efficiency is improved.

FIG. 2 to FIG. 5 are merely an example of this application and are not to be understood as a limitation on this application.

The preferred implementations of this application are described in detail above with reference to the accompanying drawings. However, this application is not limited to the specific details in the foregoing implementations. In the scope of the technical idea of this application, various simple variants can be made on the technical solution of this application, and the simple variants all belong to the protection scope of this application. For example, the specific technical features described in the above specific implementations may be combined in any suitable manner without contradiction. To avoid unnecessary repetition, various possible combinations are not further described in this application. For another example, the various implementations of this application may be combined without departing from the idea of this application, and such combinations shall also fall within the scope of this application.

The method embodiments of this application are described in detail with reference to FIG. 2 to FIG. 5. The following describes the apparatus embodiment of this application in detail.

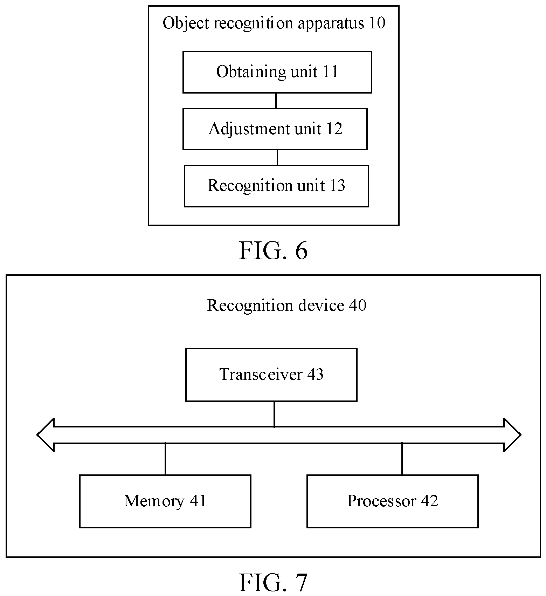

FIG. 6 is a schematic structural diagram of an object recognition apparatus according to an embodiment of this application. The apparatus 10 includes:

an obtaining unit 11, configured to obtain a distance between a to-be-recognized object and a recognition device;

an adjustment unit 12, configured to: if the distance is not equal to a target distance, control, according to the distance, a wind pressure generator to adjust a wind pressure acting on the to-be-recognized object, to cause the to-be-recognized object to move to a location having the target distance to the recognition device under the action of the wind pressure, the wind pressure including a negative wind pressure and a positive wind pressure, the negative wind pressure being configured for causing the to-be-recognized object to move toward the recognition device, the positive wind pressure being configured for causing the to-be-recognized object to move away from the recognition device; and

a recognition unit 13, configured to recognize the to-be-recognized object having the target distance to the recognition device, to obtain a recognition result.

In some embodiments, the adjustment unit 12 is further configured to control, according to the distance, the wind pressure generator to adjust the wind pressure acting on the to-be-recognized object; obtain a distance between the to-be-recognized object and the recognition device when an adjusted wind pressure acts on the to-be-recognized object; and if the distance is not equal to the target distance, continue to adjust, according to the distance, the wind pressure acting on the to-be-recognized object until a distance between the to-be-recognized object and the recognition device reaches the target distance.

In some embodiments, the adjustment unit 12 is further configured to determine a distance difference between the distance and the target distance; and control, according to the distance difference, the wind pressure generator to adjust the wind pressure acting on the to-be-recognized object.

In some embodiments, the adjustment unit 12 is further configured to: if the distance difference is greater than 0, control the wind pressure generator to adjust the wind pressure acting on the to-be-recognized object to the negative wind pressure, to cause the to-be-recognized object to move toward the recognition device under the action of the negative wind pressure; or if the distance difference is less than 0, control the wind pressure generator to adjust the wind pressure acting on the to-be-recognized object to the positive wind pressure, to cause the to-be-recognized object to move away from the recognition device under the action of the positive wind pressure.

In some embodiments, the adjustment unit 12 is further configured to determine a target wind pressure of the wind pressure generator according to the distance difference; and control the wind pressure generator to adjust the wind pressure acting on the to-be-recognized object to the target wind pressure.

In some embodiments, the adjustment unit 12 is further configured to determine a pressure adjustment value; and determine the target wind pressure according to the distance difference and the pressure adjustment value.

In some embodiments, the adjustment unit 12 is further configured to determine a first wind pressure value according to the distance difference and the pressure adjustment value; determine a second wind pressure value according to a preset sense force and a force bearing area of the to-be-recognized object; and determine the target wind pressure according to the first wind pressure value and the second wind pressure value.

In some embodiments, the adjustment unit 12 is further configured to determine a product of the distance difference and the pressure adjustment value as the first wind pressure value.

In some embodiments, the adjustment unit 12 is further configured to determine a resistance coefficient corresponding to the to-be-recognized object; determine a product of the resistance coefficient and the force bearing area of the to-be-recognized object; and determine a ratio of the sense force to the product as the second wind pressure value.

In some embodiments, the adjustment unit 12 is further configured to determine a sum of the first wind pressure value and the second wind pressure value as the target wind pressure.

In some embodiments, the adjustment unit 12 is further configured to determine a target wind speed according to the target wind pressure; and control the wind pressure generator to adjust a wind speed to the target wind speed, to control the wind pressure generator to adjust the wind pressure acting on the to-be-recognized object to the target wind pressure.

In some embodiments, the adjustment unit 12 is further configured to obtain a distance between a palm and the recognition device; control, according to the distance, the wind pressure generator to adjust a wind pressure acting on the palm, to cause the palm to move to a location having the target distance to the recognition device under the action of the wind pressure; and recognize the palm having the target distance to the recognition device, to obtain a recognition result of the palm.

The apparatus embodiment and the method embodiment may correspond to each other. For similar descriptions, refer to the method embodiment. To avoid repetition, details are not described herein again. Specifically, the apparatus 10 shown in FIG. 6 may execute the method embodiments, and the foregoing and other operations and/or functions of the modules in the apparatus 10 are separately used to implement the foregoing method embodiments. For brevity, details are not described herein again.

The apparatus in this embodiment of this application is described above from the perspective of the functional modules with reference to the accompanying drawings. The functional module may be implemented in a hardware form, may be implemented in an instruction in a software form, or may be implemented in a combination of hardware and software modules. Specifically, the operations of the method embodiments in the embodiments of this application may be completed by using an integrated logic circuit of hardware in a processor and/or instructions in a form of software. Operations of the methods disclosed with reference to the embodiments of this application may be directly performed and completed by using a hardware decoding processor, or may be performed and completed by using a combination of hardware and a software module in the decoding processor. Optionally, the software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the operations in the foregoing method embodiments in combination with hardware thereof.

FIG. 7 is a schematic block diagram of a recognition device according to an embodiment of this application. The recognition device includes a wind pressure generator.

As shown in FIG. 7, the recognition device 40 may include:

a memory 41 and a processor 42, the memory 41 being configured to store a computer program and transmit the computer program to the processor 42. In other words, the processor 42 may invoke the computer program from the memory 41 and run the computer program, to implement the method in the embodiments of this application, for example, obtain a distance between a to-be-recognized object and the recognition device; if the distance is not equal to a target distance, control, according to the distance, the wind pressure generator to adjust a wind pressure acting on the to-be-recognized object, to cause the to-be-recognized object to move to a location having the target distance to the recognition device under the action of the wind pressure, the wind pressure including a negative wind pressure and a positive wind pressure, the negative wind pressure being configured for causing the to-be-recognized object to move toward the recognition device, the positive wind pressure being configured for causing the to-be-recognized object to move away from the recognition device; and recognize the to-be-recognized object having the target distance to the recognition device, to obtain a recognition result.

For example, the processor 42 may be configured to perform the method embodiments according to instructions in the computer program.

In some embodiments of this application, the processor 42 may include but is not limited to:
a general purpose processor, a digital signal processor (DSP), an application specific integrated circuit (ASIC), a field programmable gate array (FPGA) or another programmable logical device, a discrete gate or transistor logic device, a discrete hardware component, or the like.

In some embodiments of this application, the memory 41 includes but is not limited to:
a volatile and/or a non-volatile memory. The non-volatile memory may be a read-only memory (ROM), a programmable ROM (PROM), an erasable programmable read-only memory (EPROM), an electrically EPROM (EEPROM), or a flash memory. The volatile memory may be a random access memory (RAM), and is used as an external cache. It is described as an example but not a limitation, many forms of RAMs, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory SLDRAM), and a direct rambus random access memory (DR RAM), may be used.

In some embodiments of this application, the computer program may be divided into one or more modules. The one or more modules are stored in the memory 41, and are executed by the processor 42, to complete the method provided in this application. The one or more modules may be a series of computer program instruction segments that can perform a specific function, and the instruction segment is configured to describe an execution process of the computer program in the recognition device.

As shown in FIG. 7, the recognition device 40 may further include:
a transceiver 43, where the transceiver 43 may be connected to the processor 42 or the memory 41.

The processor 42 may control the transceiver 43 to communicate with another device. Specifically, the transceiver may send information or data to the another device or receive information or data sent by the another device. The transceiver 43 may include a transmitter and a receiver. The transceiver 43 may further include an antenna, and a quantity of the antenna can be one or more.

Components in the recognition device are connected by a bus system. In addition to a data bus, the bus system further includes a power bus, a control bus, and a status signal bus.

This application further provides a computer storage medium, having a computer program stored therein. When the computer program is executed by a computer, the computer is enabled to perform the method according to the foregoing method embodiments.

An embodiment of this application further provides a computer program product including instructions. When run on a computer, the instructions enable the computer to perform the method according to the method embodiments.

When software is used to implement the embodiments, all or a part of the embodiments may be implemented in a form of a computer program product. The computer program product includes one or more computer instructions. When the computer instructions are loaded and executed on the computer, the procedures or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium that a computer can access or a data storage device such as a server or a data center that includes one or more integrated available media. The available medium may be a magnetic medium (such as a floppy disk, a hard disk, or a magnetic tape), an optical medium (such as a digital video disc (DVD)), a semiconductor medium (such as a solid state disk (SSD)) or the like.

A person of ordinary skill in the art may be aware that, in combination with the examples described in the embodiments disclosed in this specification, modules and algorithm operations may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it is not to be considered that the implementation goes beyond the scope of this application.

In the several embodiments provided in this application, the disclosed system, apparatus, and method may be implemented in other manners. For example, the described apparatus embodiment is merely exemplary. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on multiple network units. A part or all of the modules may be selected according to actual needs to achieve the objectives of the solutions of the embodiments. In addition, functional modules in the embodiments of this application may be integrated into one processing module, or each of the modules may exist alone physically, or two or more modules may be integrated into one module.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An object recognition method, applicable to a recognition device, the recognition device comprising a wind pressure generator, and the method comprising:

    obtaining a distance between a to-be-recognized object and the recognition device;
    when the distance is not equal to a target distance between the to-be-recognized object and the recognition device, controlling the wind pressure generator to adjust a wind pressure acting on the to-be-recognized object, to cause the to-be-recognized object to move to a location having the target distance to the recognition device under the action of the wind pressure, the wind pressure comprising a negative component and a positive component, the negative component being configured for causing the to-be-recognized object to move toward the recognition device, the positive component being configured for causing the to-be-recognized object to move away from the recognition device; and
    when the distance is equal to the target distance, recognizing the to-be-recognized object to obtain a recognition result.

2. The method according to claim 1, wherein the controlling the wind pressure generator to adjust the wind pressure acting on the to-be-recognized object, to cause the to-be-recognized object to move to the location having the target distance to the recognition device under the action of the wind pressure comprises:

    controlling, according to the distance, the wind pressure generator to adjust the wind pressure acting on the to-be-recognized object;
    obtaining a first distance between the to-be-recognized object on which the wind pressure adjusted acts, and the recognition device; and
    when the first distance is not equal to the target distance, continuing to control, according to the first distance, the wind pressure generator to adjust the wind pressure acting on the to-be-recognized object until the first distance between the to-be-recognized object and the recognition device reaches the target distance.

3. The method according to claim 1 or 2, the controlling the wind pressure generator to adjust the wind pressure acting on the to-be-recognized object comprises:

    determining a distance difference between the distance and the target distance; and
    controlling, according to the distance difference, the wind pressure generator to adjust the wind pressure acting on the to-be-recognized object.

4. The method according to claim 3, wherein the controlling, according to the distance difference, the wind pressure generator to adjust the wind pressure acting on the to-be-recognized object comprises:

when the distance difference is greater than 0, controlling the wind pressure generator to adjust the wind pressure acting on the to-be-recognized object to the negative component, to cause the to-be-recognized object to move toward the recognition device under the action of the negative component; or
when the distance difference is less than 0, controlling the wind pressure generator to adjust the wind pressure acting on the to-be-recognized object to the positive component, to cause the to-be-recognized object to move away from the recognition device under the action of the positive component.

5. The method according to claim 3, wherein the controlling, according to the distance difference, the wind pressure generator to adjust the wind pressure acting on the to-be-recognized object comprises:

determining a target wind pressure of the wind pressure generator according to the distance difference; and controlling the wind pressure generator to adjust the wind pressure acting on the to-be-recognized object to the target wind pressure.

6. The method according to claim 5, wherein the determining the target wind pressure of the wind pressure generator according to the distance difference comprises:

determining a pressure adjustment value for the to-be-recognized object; and
determining the target wind pressure according to the distance difference and the pressure adjustment value.

7. The method according to claim 6, wherein the determining the target wind pressure according to the distance difference and the pressure adjustment value comprises:

determining a first wind pressure value according to the distance difference and the pressure adjustment value; determining a second wind pressure value according to a preset sense force and a force bearing area of the to-be-recognized object; and
determining the target wind pressure according to the first wind pressure value and the second wind pressure value.

8. The method according to claim 7, wherein the determining the first wind pressure value according to the distance difference and the pressure adjustment value comprises:
determining a product of the distance difference and the pressure adjustment value as the first wind pressure value.

9. The method according to claim 7 or 8, wherein the determining the second wind pressure value according to the preset sense force and the force bearing area of the to-be-recognized object comprises:

determining a resistance coefficient of the to-be-recognized object;
determining a product of the resistance coefficient and the force bearing area of the to-be-recognized object; and determining a ratio of the preset sense force to the product as the second wind pressure value.

10. The method according to any one of claims 7 to 9, wherein the determining the target wind pressure according to the first wind pressure value and the second wind pressure value comprises:
determining a sum of the first wind pressure value and the second wind pressure value as the target wind pressure.

11. The method according to any one of claims 5 to 10, wherein the controlling the wind pressure generator to adjust the wind pressure acting on the to-be-recognized object to the target wind pressure comprises:

determining a target wind speed of the wind pressure generator according to the target wind pressure; and controlling the wind pressure generator to adjust a wind speed of the wind pressure generator to the target wind speed, to control the wind pressure generator to adjust the wind pressure acting on the to-be-recognized object to the target wind pressure.

12. The method according to any one of claims 1 to 11, wherein the to-be-recognized object is a palm, and the obtaining the distance between the to-be-recognized object and the recognition device comprises:

obtaining the distance between the palm and the recognition device;
the controlling, according to the distance, the wind pressure generator to adjust the wind pressure acting on the to-be-recognized object, to cause the to-be-recognized object to move to the location having the target distance to the recognition device under the action of the wind pressure comprises:

controlling, according to the distance, the wind pressure generator to adjust the wind pressure acting on the palm, to cause the palm to move to the location having the target distance to the recognition device under the action of the wind pressure; and
the recognizing the to-be-recognized object having the target distance to the recognition device, to obtain the recognition result comprises:
recognizing the palm having the target distance to the recognition device, to obtain the recognition result of the palm.

13. An object recognition apparatus, applicable to a recognition device, the recognition device comprising a wind pressure generator, and the apparatus comprising:

an obtaining unit, configured to obtain a distance between a to-be-recognized object and the recognition device;
an adjustment unit, configured to: when the distance is not equal to a target distance between the to-be-recognized object and the recognition device, control the wind pressure generator to adjust a wind pressure acting on the to-be-recognized object, to cause the to-be-recognized object to move to a location having the target distance to the recognition device under the action of the wind pressure; and
a recognition unit, configured to recognize, when the distance is equal to the target distance, the to-be-recognized object, to obtain a recognition result.

14. A recognition device, comprising a wind pressure generator, a processor, and a memory,

the memory being configured to store a computer program; and
the processor being configured to invoke the computer program stored in the memory and run the computer program, to: obtain a distance between a to-be-recognized object and the recognition device; when the distance is not equal to a target distance between the to-be-recognized object and the recognition device, control the wind pressure generator to adjust a wind pressure acting on the to-be-recognized object, to cause the to-be-recognized object to move to a location having the target distance to the recognition device under the action of the wind pressure, the wind pressure comprising a negative component and a positive component, the negative component being configured for causing the to-be-recognized object to move toward the recognition device, the positive component being configured for causing the to-be-recognized object to move away from the recognition device; and when the distance is equal to the target distance, recognize the to-be-recognized object, to obtain a recognition result.

15. A computer-readable storage medium, configured to store a computer program, the computer program causing a computer to perform the method according to any one of claims 1 to 12.

16. A computer program, the computer program, when run on a computer, causing the computer to perform the method according to any one of claims 1 to 12.

Recognition
device

Acquisition
device

To-be-
recognized
object

Processor

Distance
measurement
device

Wind pressure
generator

FIG. 1

| Obtain a distance between a to-be-recognized object and a recognition device | S201 |

↓

| If the distance is not equal to a target distance, control, according to the distance, a wind pressure generator to adjust a wind pressure acting on the to-be-recognized object, to cause the to-be-recognized object to move to a location having the target distance to the recognition device under the action of the wind pressure | S202 |

↓

| Recognize the to-be-recognized object having the target distance to the recognition device, to obtain a recognition result | S203 |

FIG. 2

Recognition preparation — S301

Obtain a distance between a to-be-recognized object and a recognition device — S302

Determine whether the distance is equal to a target distance — S303

Yes

No

Determine a distance difference between the distance and the target distance — S304

Determine whether the distance difference is less than 0 — S305

Yes

No

Determine a target wind pressure according to the distance difference, and control a wind pressure generator to generate a positive wind pressure of the target wind pressure to act on the to-be-recognized object, to cause the to-be-recognized object to move away from the recognition device — S306

Determine a target wind pressure according to the distance difference, and control a wind pressure generator to generate a negative wind pressure of the target wind pressure to act on the to-be-recognized object, to cause the to-be-recognized object to approach the recognition device — S310

Determine whether the distance between the to-be-recognized object and the recognition device increases — S307

No

Yes — S309

Determine whether the distance between the to-be-recognized object and the recognition device is reduced — S311

No

Yes

Control the wind pressure generator to increase the positive wind pressure

Control the wind pressure generator to reduce the positive wind pressure — S308

Control the wind pressure generator to increase the negative wind pressure — S312

Control the wind pressure generator to reduce the negative wind pressure — S313

Determine whether a distance between the to-be-recognized object and the recognition device is equal to the target distance — S314

No

Yes

Control the wind pressure generator to stop outputting the wind pressure — S315

Recognize the to-be-recognized object, to obtain a recognition result — S316

FIG. 3

Wind hole

Palm swiping
camera

FIG. 4

| Obtain a distance between a palm and a recognition device | S501 |

Yes

| Determine whether the distance is equal to a target distance | S502 |

No

| Control, according to the distance, a wind pressure generator to adjust a wind pressure acting on the palm, to cause the palm to move to a location having the target distance to the recognition device under the action of the wind pressure | S503 |

| Recognize the palm having the target distance to the recognition device, to obtain a recognition result | S504 |

FIG. 5

Object recognition apparatus 10

Obtaining unit 11

Adjustment unit 12

Recognition unit 13

## FIG. 6

Recognition device 40

Transceiver 43

Memory 41

Processor 42

## FIG. 7

<table>
<tr><td colspan="2">INTERNATIONAL SEARCH REPORT</td><td colspan="2">International application No.<br>**PCT/CN2023/091351**</td></tr>
</table>

**A. CLASSIFICATION OF SUBJECT MATTER**

G06V 10/12(2022.01)i

According to International Patent Classification (IPC) or to both national classification and IPC

**B. FIELDS SEARCHED**

Minimum documentation searched (classification system followed by classification symbols)

IPC: GO6V, G06K

Documentation searched other than minimum documentation to the extent that such documents are included in the fields searched

Electronic data base consulted during the international search (name of data base and, where practicable, search terms used)

DWPI, CNABS, WPABS, CNTXT, USTXT, CNKI, CJFD: 识别, 距离, 位置, 风力, 风压, 正压, 负压, 压力, 推力, 推动, 移动, 前进, 后退, 风, 距离差, 阻力, identification, identify, identify+, distance, location, wind, wind pressure, positive pressure, negative pressure, pressure, thrust, push, move, forward, reverse, wind, difference in distance, resistance

**C. DOCUMENTS CONSIDERED TO BE RELEVANT**

| Category* | Citation of document, with indication, where appropriate, of the relevant passages | Relevant to claim No. |
|---|---|---|
| A | CN 114241343 A (CHINA TELECOM CORP., LTD.) 25 March 2022 (2022-03-25)<br>entire document | 1-16 |
| A | CN 114299103 A (DILU TECHNOLOGY CO., LTD.) 08 April 2022 (2022-04-08)<br>entire document | 1-16 |
| A | CN 101466624 A (WINTEC CO., LTD.) 24 June 2009 (2009-06-24)<br>entire document | 1-16 |
| A | JP 2005349774 A (CANON K. K.) 22 December 2005 (2005-12-22)<br>entire document | 1-16 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 August 2023** | **03 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091351**

| Patent document cited in search report | | | Publication date (day/month/year) | Patent family member(s) | | | Publication date (day/month/year) |
|---|---|---|---|---|---|---|---|
| CN | 114241343 | A | 25 March 2022 | None | | | |
| CN | 114299103 | A | 08 April 2022 | None | | | |
| CN | 101466624 | A | 24 June 2009 | EP | 2055656 | A1 | 06 May 2009 |
| | | | | EP | 2055656 | A4 | 30 September 2009 |
| | | | | EP | 2055656 | B1 | 24 November 2010 |
| | | | | JP | 4130697 | B2 | 06 August 2008 |
| | | | | JPWO | 2008023514 | A1 | 07 January 2010 |
| | | | | AU | 2007287117 | A1 | 28 February 2008 |
| | | | | AU | 2007287117 | B2 | 11 November 2010 |
| | | | | AU | 2007287117 | B8 | 10 March 2011 |
| | | | | DE | 602007010791 | D1 | 05 January 2011 |
| | | | | RU | 2008148593 | A | 20 June 2010 |
| | | | | RU | 2398725 | C2 | 10 September 2010 |
| | | | | US | 2009218757 | A1 | 03 September 2009 |
| | | | | US | 8087669 | B2 | 03 January 2012 |
| | | | | AT | 489318 | T | 15 December 2010 |
| | | | | KR | 20090010988 | A | 30 January 2009 |
| | | | | KR | 100890120 | B1 | 24 March 2009 |
| | | | | WO | 2008023514 | A1 | 28 February 2008 |
| | | | | CN | 101466624 | B | 08 June 2011 |
| | | | | HK | 1131956 | A1 | 13 March 2012 |
| | | | | DE | 602007010791 | D1 | 05 January 2011 |
| | | | | SG | 147864 | B | 30 September 2010 |
| | | | | SG | 147864 | A1 | 31 December 2008 |
| JP | 2005349774 | A | 22 December 2005 | JP | 4429088 | B2 | 10 March 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022107158330